# EUROPEAN PATENT SPECIFICATION

(11) **EP 4 230 659 B1**
(45) Date of publication and mention of the grant of the patent: **09.09.2026**
(21) Application number: 22158102.8
(22) Date of filing: 22.02.2022
(51) Int. Cl.: C09J 7/38, C08F 290/02, C09J 4/06, C08F 2/26

(54) **BIODEGRADABLE BIMODAL POLYMERS AND METHOD FOR PRODUCING THEM.**
BIOLOGISCH ABBAUBARE BIMODALE POLYMERE UND VERFAHREN ZU IHRER HERSTELLUNG.
POLYMÈRES BIODÉGRADABLES ET BIMODAUX ET LEURS PROCÉDÉS DE PRODUCTION

(43) Date of publication of application: 23.08.2023
(73) Proprietor: ORGANIK KIMYA SAN. VE TIC. A.S., 34075 Kemerburgaz/Eyup, Istanbul (TR); Organik Kimya Netherlands BV, 3197 KC Botlek Rotterdam (NL)
(72) Inventor: ERGUN ERSEN, Nur Basak, 34075 Kemerburgaz, Eyüp - Istanbul (TR); AKARSU DÜLGAR, Cansu, 34075 Kemerburgaz, Eyüp - Istanbul (TR); KARAGÖZ, Sevki, 34075 Kemerburgaz, Eyüp - Istanbul (TR); MOSCATELLI, Davide, 34075 Kemerburgaz, Eyüp - Istanbul (TR)
(74) Representative: Plasseraud IP

(56) References cited:
- EP-A1- 0 759 946
- EP-A1- 3 623 391
- WO-A2-2012/021721
- WO-A2-2020/101606
- US-B1- 6 258 888

## Description

The present invention relates to a waterborne biodegradable polymer composition, particularly a waterborne biodegradable pressure sensitive adhesive composition having a polymodal or a bimodal particle size distribution and which at the same time have the expected properties from a prior art non-biodegradable pressure sensitive adhesive. The present invention also relates to a bio-modal process for producing such a biodegradable polymer, particularly a biodegradable pressure sensitive adhesive
with a polymodal or a bimodal particle size distribution.

One of the most important challenges of the 21st century is reducing the amount of plastic residue produced by humans. The plastic production has grown faster than any other material since the 1950s. It is estimated that, the amount of plastic produced is
more than 8.3 billion tonnes. More than 99% of plastic is made from chemicals derived from oil, natural gas and coal, all of which are pollutant, non-renewable resources whereas 9% of those plastics has been recycled, approximately 12% of those has been incinerated. On the other hand, when they are not disposed of properly, they can leak into the environment and become eventually a source of pollution. Although beneficial features of plastics including durability, convenience and affordability make them favorable, their persistence and resistance to degradation cause environmental concerns. Since most plastics do not break down completely, they pollute environment in the form of both macroplastics and of microplastics. Microplastics entering the food chain can lead to detrimental health effects and consequently threaten biodiversity and food security.

The use of biodegradable plastics would contribute to sustainability and decline of ecotoxicological effects affiliated with conventional plastics. Biodegradable plastics are described as polymeric materials being capable of decomposing into carbon dioxide, methane, water, inorganic compounds or biomass by predominantly enzymatic action of microorganisms in a specified period. Compostable plastics as a subset of biodegradable plastics refer to plastics degrading biologically in a compost system. Furthermore, compostable adhesives do not leave harmful residue or waste once fully composted. Compostable adhesives/polymers may be used for the applications such as sustainable packaging, labelling, paper coating, paper tapes, biodegradable film adhesives (such as PLA tapes / labels). Adhesive polymers may be used directly or as a combination with degradable tackifying agents.

Abiotic (thermal, photo) and biotic processes can be included to reduce the polymer to a low molecular weight species under appropriate conditions. Nonetheless, the obtained disintegrated fragments must be entirely used by microorganisms; otherwise, they pose environmental and health threats.

Packaging wastes constitute an important part of municipal solid waste and have provoked increasing environmental concerns, leading to strengthening of various regulations in order to reduce the amount produced. A wide variety of petrochemical polymers are used in packaging applications at present and almost none of them is biodegradable, and recycling and reusing are problematic due to their complicated composite structures.

In recent years, interest in biocompostable/ biodegradable materials has increased with the spread of sustainable technologies. The requirements for bio-compostable products that do not harm the environment have been determined by various standards such as EN 13432 and many studies have been published in this field. Non-
biocompostable materials contain harmful substances. Biocompostable materials are substances that are destroyed by biological means by various microorganisms in nature and separated into their natural components, so that they can participate in the cycle of nature.

In Europe, current single-use plastic packaging materials are biodegradable and compostable while meeting the requirements of European standard EN 13432 "Requirements for packaging recoverable by composting and biodegradation - Test scheme and evaluation criteria for final acceptance of packaging". That is to say, a material must have characteristics defined in EN 13432 standard in order to be accepted as compostable which means recycled through composting and anaerobic digestion. The following criteria must be tested in a laboratory to fulfil EN 13432:
- Disintegration: This is measured in a pilot composting test in which samples of the test material are composted with biowaste for 3 months. After this time, the mass of test material residues must be less than 10% of the original mass.
- Biodegradability: This means compostable material should be converted into CO2 with the action of microorganisms. The standard obligates at least 90% biodegradation threshold in less than 6 months.
- Absence of negative effects on the composting process.
- The amount of heavy metals must be below given maximum values and the resultant compost must not be influenced adversely.

Emulsion polymerization has been an alternative way to produce environmentally friendly polymers, which is a well-known process for producing water based acrylic emulsions. Due to the increasing strictness of environmental regulations, the importance of water-based emulsion polymers has been increasing every day. These are dispersions of polymer particles in an aqueous medium and are used in a wide variety of applications such as adhesives, paints, coatings, paper coatings, paper impregnations, textile coatings, wood coatings, construction and building materials such as caulks and sealants, waterproofing roof coatings, cement additives. The importance of emulsion polymerization process has grown significantly since the second half of the 20th century, due to the wide ranging applications of water-based latexes. Additionally, the environmental regulations and awareness of the consumers have led to the replacement of solvent-based polymers with water-based emulsions. Unlike solution polymers, emulsion polymers are produced in a heterogeneous, 2 phase system. Emulsion polymerization is a type of free radical polymerization process which most of the time starts with an emulsion incorporating water, at least one monomer and a surfactant. The resulting polymers produced in such a way are, polymer particles dispersed in the water phase. In this complicated process surfactants are of paramount importance in order to stabilize the polymer particles, both during and after polymerization. During the polymerization process, surfactants provide sites for particle nucleation, controls the particle size and provides colloidal stability as the particles are formed. Thus, besides solubilizing hydrophobic monomers, surfactants in conventional emulsion polymerization process have various functions such as affecting the number and size of the emulsion particles formed, providing stability, as particles continue to grow in the dispersion and during post-polymerization processing. Examples of typical conventional surfactants generally used in emulsion polymerization are anionic surfactants such as fatty acid soaps, alkyl carboxylates, alkyl sulfates and alkyl sulfonates, non-ionic surfactants such as ethoxylated alkylphenol or fatty acids and cationic surfactants such as amines, nitriles and etc.

Although resulting with water-based polymer dispersions and being much more environmentally friendly when compared to solvent-based polymers, nonetheless emulsion polymers as such, are not sufficient to meet today's expectations of sustainability. However, it is still the best starting point to reach a sustainable and environmentally friendly product, as it has been in the past.

Typical emulsion polymers found in the market have solid content lower than 55% by weight. In fact, most of the time solid contents are even lower, -as it is well known in the art, when higher solid content is targeted in the emulsion polymerization process, the viscosity rises sharply as the solid content increases. High viscosity products are not only difficult to handle, but they are also risky to produce, tending to generate grit during processing, if not resulting in partial or total coagulation of the product. However, highly concentrated latexes have many advantages such as faster drying rates and lower shipping cost for the same amount of active content. Therefore, synthesis of latexes having high solid and low viscosity is a major source of interest in this field. Accordingly, the synthesis of latex polymers with high solid content and low viscosity has gained great interest from both industry and academia. Highly concentrated emulsions with a solid content above 60% have numerous advantages including the higher unitary usage of industrial installations during production and the faster drying rates during application. Low viscosity enhances the heat removal rate and agitation during the polymerization process, which results in improvements of safety, production capacity and product quality. Additionally, low viscosity of the emulsion polymer adhesives also enhances the convenience of application on high-speed coater machines. For a given solid content, the viscosity of latex decreases with the increase of average particle size.

In the prior art, a few processes can be found for the preparation of high solid polymer dispersions. Most of these are based on very narrow and specific processing conditions.

U.S. Pat. No. 4,424,298 describes a composition for polymer dispersions with high solid in which a very precise combination of surfactants is prescribed (at least one sulfosuccinate-based surfactant together with a fatty alcohol ethoxylate and sulphated one).

EP-A 784060 relates to a process for preparing polymer dispersions having a high solid content of more than 67%, in which carboxyl-functional monomers are polymerized with further ethylenically unsaturated monomers in the presence of a surfactant and where further surfactant is added at a monomer conversion of from 40% to 60%.

U.S. Pat. No. 4,456,726 discloses highly concentrated, bimodal, aqueous synthetic resin dispersions by the emulsion polymerization of ethylenically unsaturated monomers, in the presence of emulsifiers and prescribes the use of two polymer latexes of different particle size to be included in the initial charge and the monomers are polymerized subsequently.

Thus, producing water based high solid emulsion polymers is already a known method of providing better products for the environment. However increased environmental concerns over the use of certain synthetic packaging and coatings in combination with consumer demands for both higher quality and longer shelf life have led to increased interest in alternative packaging materials research.

The pressure sensitive adhesive (PSA) industry is one of the fastest growing industry in the adhesive market and acrylic PSAs dominate the PSA market. PSAs are defined as permanently tacky materials that adhere with pressure and apply a strong holding force, belongs to acrylic copolymers. They are mainly composed by a low Tg acrylate for softness and tackiness, and a low percentage of a hard monomer to improve cohesiveness. As also mentioned in several articles (DOI: 10.1021/acs.iecr.8b03354) unsaturated carboxylic acid imparts wettability and enhances both adhesion and cohesion strength. Adhesion is simply the ability of adhesives to wet the substrate and then bond to it. Cohesion on the other hand is the internal strength of an adhesive to itself. Several factors other than the chemical properties of the adhesive also effect the adhesion for example the roughness, humidity, moisture, surface tension and shape of the substrate: temperature, service temperature, resistance to oxidation and UV light. Adhesion can also be defined as the molecular attraction between unlike materials, like magnetic force. The surface energy of a material determines the strength of this attraction. Lower surface energy means weaker attraction; hence, materials that have high surface energy are easy to adhere materials.

The acrylic backbone of acrylic pressure sensitive adhesives or acrylic paper binders prevents their complete biodegradability. Nonetheless, incorporation of side groups formed from carbohydrates, fatty acids and polyesters can induce biodegradability to acrylic PSAs. Chemical structure is the decisive factor in biodegradability of polymers rather than origin. Some polyesters such as polyhydroxyalkanoates and poly-3-hydroxybutyrate synthesized by microorganisms and polylactic acid produced from bio-based monomers are of great interest due to their inherent biodegradability. Biodegradable moieties can be incorporated into conventional polymer formulations via grafting of biodegradable macromonomers; copolymerization with those macromonomers.

Therefore, it is already a challenging task to develop a biodegradable adhesive especially using an emulsion polymerization process.

Most of the textile products used today, are produced from plastic-based acrylic, nylon or polyester threads, that are cut and sewn in factories. All such materials are chemically produced and are non-biodegradable. Therefore, in recent years, the use of bio-compostable polymers has been evaluated also in the textile industry for the same reasons mentioned herein before. Similarly, it is foreseen that the use of biodegradable/ bio-compostable structures will also become widespread in many leather applications such as leather retanning agents, leather embossing binders and so on. Thus there is also a need for a bio-degradable emulsion polymer to be used in textile applications.

Bio-compostable/biodegradable structures containing lactide and lactic acid units have been used in various ways and in a broad range of application fields such as medical, surgical thread, hot melt and pressure sensitive adhesives, leather, sticking paper, stationery, office, electronics, automobile edge trimming fixation, shoe industry, handwork ornament pasting and fixation applications and in scientific literature. Some of these prior art references have been summarized as below:
EP1152776A1 discloses a biodegradable, injectable oligomer-polymer composition consisting of a combination of at least two biodegradable auxiliaries and at least one biologically active substance. The oligomer-polymer of the prior art composition coagulates when it is injected into the body of a mammal and forms an implant. The biologically active substance is released from said implant.

US5252646A is about hot melt adhesive compositions which are prepared from 20 to 98% by weight of a polylactide homo- or copolymer containing at least 20 molar percent of the lactide component; 2 to 80% by weight of a polar tackifier having a Ring and Ball softening point (as described by ASTM E-26) greater than about 60° C.; 0 to 50% by weight of a plasticizer; 0 to 30% by weight of a wax diluent; 0-3% by weight of a stabilizer; and 0-20% of a polymer. By utilizing a naturally occurring, thermoplastic, biodegradable copolymer as the base polymer, these adhesives advance the state of the art of hot melt adhesives by alleviating the dependence on petroleum-based materials and by allowing for the development of hot melt adhesives which either degrade naturally after coming in contact with the soil or which can be composted.

JP2002234934A discloses a biodegradable copolymer obtained by ring-opening polymerization of lactide and c-caprolactone having at least one reactive substituent selected from the group consisting of a hydroxyl group, an amino group and a carboxyl group. Said structures are bio-degradable polymers which can be used in medical materials such as surgical thread and a pesticide tissue such as herbicide.

In US9334428B2, examples of 1-hexyl acryloxylactide, 1,4-butyl bis(acryloxy)lactide, benzyl 2- acryloxy lactide are disclosed, which provides information about a pressure-sensitive adhesive layer and a substrate positioned adjacent to the pressure-sensitive adhesive layer.

In US7053151B2, there is provided a novel polymer composition comprising a blend of a first biodegradable polymer grafted with a polar monomer, oligomer, or polymer or a combination thereof and a second biodegradable polymer grafted with a polar monomer, oligomer, or polymer or a combination thereof, wherein the first and second biodegradable polymers are different polymers. The ratio of the two biodegradable polymers useful in this invention is about 1:99 and 99:1 by weight. A desired first and second biodegradable polymer in this invention is modified polylactide and modified PHBV. Amount of grafting monomer for either of the modified biodegradable polymers is about 1 to 20 percent by weight of the starting or non-grafted biodegradable polymer.

WO2021/058122A1 refers to provide a method for producing a polymeric composition which may especially be used for or as an adhesive, especially a pressure-sensitive adhesive, particularly a pressure- sensitive adhesive degradable under basic condition, and which is preferably in the form of a water-based (waterborne) composition, more preferably a dispersion (emulsion or latex). In this patent, there exists different structures, that have at least one crosslinking (macro)monomer or oligomer, which crosslinker comprises moieties (units) derived from e-caprolactone (1-oxa-2-oxocylcoheptane) and/or lactide (3,6-dimethyl-1 ,4-dioxan-2,5-dion) and which crosslinker additionally comprises two ethylenically unsaturated bonds (carbon-carbon double bonds).

WO2014/027906A1 relates to biodegradable textiles and methods of the manufacture of biodegradable textiles primarily for medical uses. Bio-degradable textile materials characterized in that they contain a plurality of fibers prepared from a melt of the copolymer of lactide with glycolide with average molecular mass in the range of 190 000 - 300 000, glass transition temperature of 53 - 60°C, melting temperature of 152155°C and enthalpy of fusion -above 41J/g, with a content of unreacted monomers in the amount not exceeding 2% wt.

CN107177339A discloses a biodegradable bonding agent material prepared from lactide chemical synthesis products. The LA materials are poured into a reaction container containing solvents according to the proportion of 5 to 50 percent of the mass of the solvents; a reactor has a stirring and control function; the reactor is controlled
under the nitrogen gas protection condition; a certain reaction temperature is controlled; meanwhile, the stirring is performed; after the LA is completely fused, catalysts are added; after reacting for a period of time, stirring is stopped; after the materials are taken out, extraction and centrifugation are performed, so that the LA chemical synthesis products are obtained; then, the LA chemical synthesis products are dissolved by acetic ester, so that the biodegradable bonding agent is obtained. The bonding agent has the characteristics that the preparation is simple; the relative molecular weight and the viscosity are controllable; the biodegradable performance is realized.

WO 2012/021721 A2 (D1) describes pressure sensitive adhesives having bio-based content but it does not disclose a bimodal particle distribution contrary to the present invention.

Thus, it is clear that there has been several attempts to achieve this challenging task of using emulsion polymerization process in order to reach a sustainable polymer product and its use in textile applications or as a pressure sensitive adhesive. Among these the most promising ones are just at the beginning of their development, making
this field possibly open for further developments, especially for providing further solutions to the challenging task of producing sustainable emulsion polymers. The problems encountered during the emulsion polymerization process should be addressed in order to reach an emulsion polymer that would both meet the performance requirements and environmental expectations of the 21st century.

As explained in detail above, in spite of its benefits the use of plastics has some drawbacks, especially concerning its negative impacts on the environment, including landfill and plastic pollution. Plastic materials generally take centuries to breakdown naturally in the environment. This situation turns into various environmental problems associated with plastics, advancements have been made towards the manufacture and use of biodegradable plastics. Biodegradable plastics are thought to be more eco-friendly due to their environmental benefits when compared to ordinary plastics. As such, biocompostable polymers are those that can decompose naturally, by microorganisms in the environment which is less harmful for the earth and human beings. However, plastic pollution is not the only concern when trying to reach a sustainable product. Considering the environmental challenges of the 21st century there is a need for a holistic approach in the product development, where different aspects are addressed. Thus, as well as providing a solution to plastic pollution, the contribution of transportation of produced products to climate change should also be considered. As explained herein before, the present invention is based on water-based emulsion polymers which presents an advantage but at the same time is a consideration, for the environment. Emulsion polymers of the present invention are produced in water and at the end the active content is dispersed inside the water phase. It is not easy and/or most of the time not preferred to separate the active content while sending to the customer. Thus, most of the time the emulsion polymers are sent as dispersed inside water. However, this means sending great amounts of water together with the active content of polymers. As a result, each time a water-based emulsion polymer is transported, an unnecessary contribution to the climate change is made. Therefore, with a holistic approach to environmental challenges in product development, this problem should also be addressed as well as the plastic pollution. Producing emulsion polymers with higher solid content is a solution to this problem, since in high solid content emulsion polymers, the active content to water ratio increases, thus each transportation of the product contains more active content. This decreases the unnecessary contribution to the climate change due to sending water together with active content.

There are various different ways already known in the prior art to produce emulsion polymers with a high solid content. As it is disclosed in the above-mentioned prior art documents, it is also already known how to produce emulsion polymers having high solid contents with a bimodal particle size distribution. Therefore, it is clear from these disclosures that increasing the solid content of polymers with alternative particle size distributions and producing biodegradable emulsion polymers, are separately, already known in the prior art. However, it has never been tried to achieve a biodegradable emulsion polymer having a polymodal, more preferably a bimodal particle size distribution. The combined effect of higher solid content and biodegradability in a water-based emulsion polymer, results with an ideally environmental product addressing all the environmental challenges of 21st century.

Although various ways of producing biodegradable emulsion polymers are known as mentioned herein before, the disadvantage of these methods of polymerization wherein biodegradable macromonomers are used besides traditional acrylic monomers of emulsion polymerization, is that it is very hard to produce these with a high solid content. Although there are some attempts to produce emulsion polymers having a high solid content, there is no prior art disclosing a biodegradable emulsion polymer having a high solid content which is achieved by a bimodal or a polymodal particle size distribution wherein said emulsion polymer is produced by using oligomer lactide 2-hydroxyethyl, methacrylate terminated (hemalactide macromonomer) or other alternative macromonomers to incorporate degradability. The combined effect of resulting with a biodegradable and high solid content emulsion polymer, achieves an ideally sustainable polymer product, since the product will not pollute the environment by its easy degradation and at the same time more active content and less water will be transported each time due to its higher solid content, thus transportation of the product will contribute less to the climate change. Furthermore, a higher unitary usage of industrial installations during production will also have the same effect.

Therefore, the object of the present invention is to provide an acrylic pressure sensitive adhesive based on water-based emulsion polymers which is biodegradable and has a bimodal or a polymodal particle size distribution. Another object of the present invention is to produce biodegradable pressure sensitive adhesives, having a high solid content. It is also an object to provide an emulsion polymer produced according to the present invention to be used in textile applications.

Furthermore, it is also an object of the present invention to provide emulsion polymers with high solid content which have an active content greater than 55%, more preferably greater than 60%, most preferably greater than 63% and at the same time exhibit low viscosity. Active content in the context of the present invention means the actual amount of polymer generated by letting or forcing the water to evaporate.

Actually, it is not an easy task to achieve a bimodal or in general a polymodal particle size distribution at the same time with a novel set of monomers to achieve biodegradability in the resulting product, since the multistage process to obtain said bimodal / polymodal particle size distributions is already a very hard to control process.

Also considering the object of reaching a high solid content in the resulting product, this becomes a much more challenging task. Especially as the solid content in the dispersion increases the risk of losing the intended particle size distribution and as the worst-case scenario the risk of coagulation is much higher. In such a process the use of surfactants is important to control the particle size distribution and in order to result with a biodegradable bimodal particle size distribution.

Therefore, there is a need for a novel process in order to control the particle size distribution of biodegradable emulsion polymers and moreover to provide a biodegradable emulsion polymer composition having a polymodal, preferably a bimodal particle size distribution.

The above-mentioned objects have been achieved by the bio-modal process of the present invention and the bio-modal polymers produced with said process. The term "bio-modal process" as used herein and throughout the specification refers to a process which results with a biodegradable emulsion polymer having a bimodal particle size distribution, preferably with a high solid content. The term "bio-modal polymers" refers as well to the biodegradable emulsion polymers having a bimodal particle size distribution of the present invention. Thus, in the context of the present invention "bio-modal" terminology is used in order to refer to having a bimodal particle size distribution and being biodegradable at the same time. Similarly, in the context of the present invention the term bio-modal is also intended to cover a polymodal particle size distribution. As used herein and throughout the specification the term "polymodal" means that there are two or more different populations of particles in the composition/dispersion and the particles in each population, differ from the other population with respect to particle sizes.

Thus, the bio-modal polymers, in other words biodegradable emulsion polymers having a polymodal, preferably bimodal particle size distribution can be produced by a multistage radical emulsion polymerization process. Accordingly, an embodiment of the present invention relates to a process for producing the polymer composition according to the present invention, which comprises the steps of:
separately providing at least one seed polymer having an average particle size of 50 nm to 500 nm, providing a monomer emulsion comprising the macromonomer oligomer lactide 2-hydroxyethyl, methacrylate terminated (hemalactide macromonomer) and comonomers suitable to copolymerize therewith,
starting to polymerize the monomer emulsion by radical emulsion polymerization in an aqueous polymerization medium containing a first seed polymer,
after 25 to 75% percent of the addition of the monomer emulsion adding a second seed polymer to the polymerization medium, and
polymerizing the rest of the monomer emulsion, so as to produce the bio-modal polymers of the present invention, having particle populations differing in average particle size.

The second seed polymer may also be added either at the start or after 30 to 70% of the addition of the monomer emulsion, more preferably 40 to 60% and most preferably after 50%.

Thus, according to the process of the present invention a seed polymer is provided separately. The seed polymer has to be present in the aqueous medium at the start of the polymerization. After, a pre-determined amount of monomer emulsion is added, a second seed polymer is added into the aqueous polymerization medium. The seed polymers used at the start and added later may have the same composition and particle size, thus being identical. In other embodiments of the present invention these seed polymers may be different in average particle sizes and/or composition. Similarly, oligomer lactide 2-hydroxyethyl, methacrylate terminated macromonomer (hemalactide macromonomer) is provided separately as well as the other monomers used in the preparation of the monomer emulsion. At the end of polymerization a polymer composition with a polymodal, preferably a bimodal particle size distribution is produced.

The resulting polymer composition is a biodegradable emulsion polymer having a polymodal, preferably a bimodal particle size distribution and preferably having a high solid content, prepared by emulsion polymerization of ethylenically unsaturated compounds together with the oligomer lactide 2-hydroxyethyl, methacrylate terminated macromonomer (macromonomer hemalactide), in the presence of a seed polymer added both at the start of polymerization and after addition of a pre-determined amount of monomer emulsion. According to the most preferred embodiment of the present invention the resulting bio-modal polymer composition has a high solid content, preferably more than 55%, more preferably more than 60% and most preferably more than 63%, due to its bimodal particle size distribution. In another embodiment the solid content may be in the range of between 50% to 60%.

In order to minimize these effects of plastics that are harmful for the environment, polymer recipes containing the bio-compostable hemalactide macromonomer is a solution. Accordingly, hemalactide macromonomer is used as the macromonomer to incorporate biodegradability. Hemalactide not only has the functionality to provide biodegradability but also provides adhesion-cohesion balance. In the context of the present invention, the term "hemalactide macromonomer" is used interchangibly with oligomer lactide 2-hydroxyethyl, methacrylate terminated macromonomer in order to refer to the same macromonomer of the present invention.

The advantages provided by the solution of the problem originates from both using a biodegradable macromonomer and producing in the end an emulsion polymer with a higher solid content. Accordingly, in order to produce the bio-modal polymers of the present invention, hemalactide macromonomer was used for synthesis of bio-compostable, bio-degradable polymers having bimodal particle size distributions.

Biodegradable plastics are thought to be more eco-friendly due to their environmental benefits when compared to ordinary plastics. As such, biocompostable polymers are those that can decompose naturally, by microorganisms in the environment which is less harmful for the earth and human beings. In order to minimize effects of plastics that are harmful for the environment, polymer recipes containing the bio-compostable/ biodegradable hemalactide macromonomer could be one solution. Thus, the present invention is directed to an adhesive produced by emulsion polymerization process with a hemalactide macromonomer. It is a preferred aspect of the present invention that the adhesive is a pressure sensitive adhesive. It is mostly preferred that the pressure sensitive adhesive is produced by emulsion polymerization wherein hemalactide is used and the resulting pressure sensitive adhesive has a bimodal particle size distribution, thus a higher solid content can be achieved.

The advantages of the bio-modal polymers of the present invention can be summarized as the following;
- Hemalactide macromonomer containing polymers are easy to recycle when discarded but can also be easily recycled through organic processes. Recycling helps to decrease landfill problems, in addition to these, the recycled bio-waste can be used as compost or as renewable energy for biogas.
- Hemalactide macromonomer containing polymers reduces the amount of waste produced. Since they are broken down by bacteria that occur naturally, these biocompostable polymers can be absorbed by the soil or converted into compost.
- Hemalactide containing polymers do not release harmful products when they decompose therefore better for marine, ecosystems and human health as well. Composting of Hemalactide containing products can make the soil fertile, thereby enhancing soil fertility. In addition to these the materials decay and help in the growth of plants.
- Oil is a significant ingredient in the manufacturing of traditional plastics. Petroleum has negative effects on the environment, considering the amount of waste produced during refinement. Bio-compostable hemalactide containing polymers can reduce the amount of petroleum used and consequently decrease the environmental hazards.
- Since fossil fuels are minimized in the manufacturing process of such eco-friendly, bio-compostable hemalactide, the carbon dioxide emissions are also decreased.
- The use of hemalactide containing polymers instead of traditional polymers decreases the amount of greenhouse gas emissions.
- With the bio-modal synthesis method of this invention, hemalactide macromonomer bearing, high-solid and low viscosity bio-compostable/bio-degradable pressure sensitive adhesives can be manufactured which contributes to productivity. Polymer latexes with bimodal particle size distribution also have some benefits regarding better rheology when driving in high speed machines. In addition to these, being high solid contributes to sustainability as it has a logistic advantage, and besides, bimodal particle sizes provide better water resistance compared to large monomodal particles in related application tests.

The bio-modal polymers of the present invention, decompose in nature over time and contribute to sustainability, due to the compostable materials in their content. In general, esters constitute main structure of most biodegradable polymers because hydrolytic cleavage of esters by enzymatic actions is a common reaction in nature. Moreover, it is believed that aliphatic esters biodegrade easier than aromatic esters due to the fact that aliphatic esters fit in a more excellent manner into enzymatic active sites.

According to the present invention it has been shown that incorporation of biodegradable oligoesters (hemalactide macromonomer) into an acrylic pressure sensitive adhesive formulation, makes the acrylic water-borne adhesive biodegradable with the desired performance. At the same time the composition is formulated in order to make it possible to produce via a multistage emulsion polymerization process that would result with a bimodal particle size distribution.

In an embodiment of the present invention, hemalactide macromonomer as the oligoester macromonomer was synthesized in a one-pot synthesis via ring-opening metathesis polymerization of lactide in the presence of 2-hydroxylethylmethacrylate. Lactide is the lactone cyclic ester of lactic acid (2-hydroxypropionic acid) that are designated as dilactides, trilactides, and etc., according to the number of hydroxy acid residues. Lactide exists in three different stereoisomeric forms as (R,R)-lactide, (S,S)-lactide and meso-lactide. It is industrially produced from lactic acid, an alpha-hydroxy acid (AHA) with the presence of a hydroxyl group adjacent to the carboxyl group. Lactic acid is industrially produced through fermentation performed by lactic acid bacteria, which convert simple carbohydrates such as glucose, sucrose, or galactose into lactic acid. Lactic acid is then pre-polymerized through a poly-condensation process that leads to the synthesis of oligomers of lactic acid with a molecular weight of approximately 1000 Da. This pre-polymer is then subsequently transformed into lactide
by a process catalyzed with acid species called backbiting. Lactide can then be polymerized to high molecular weight polylactic acid (PLA) via a process called Ring Opening Polymerization (ROP).

Therefore, in an embodiment of the present invention, bio-compostable pressure sensitive adhesives are produced, that have bio-modal structures meaning having both a bimodal particle size distribution and at the same time having biodegradability. With a bimodal particle size distribution, high solid content and low viscosity latex polymers can be achieved. Said bio-modal structures have at least 0,5 to 50% by weight of hemalactide macromonomers based on the total weight of ethylenically unsaturated monomers that are used during the synthesis of these polymers.

Another aspect of the present invention is to provide bio-compostable textile and leather binders having as well a bimodal particle size distribution. Said bio-compostable textile and leather binders have at least 0,5 to 50% by weight of hemalactide macromonomers based on the total weight of ethylenically unsaturated monomers that are used during the synthesis of these polymers.

Other monomers besides the hemalactide macromonomer, used in order to produce the polymers of the present invention are selected from the list comprising; linear, branched or cycloaliphatic alkyl(meth)acrylates, such as methyl(meth)acrylate, n-butyl(meth)acrylate, isobutyl-(meth)acrylate, 2-ethylhexyl(meth)acrylate, ethyl(meth)acrylate, lauryl(meth)acrylate, stearyl-(meth)acrylate, cyclohexyl(meth)acrylate, isobornyl(meth)acrylate, 2-octyl- (meth)acrylate and tert-butyl(meth)acrylate; arylmethacrylates, such as benzylmethacrylate, phenylacrylate and phenylmethacrylate, arylacrylic acids; styrenes and substituted styrenes, such as alpha-methylstyrenes, 4-methylstyrenes, sodium-4-vinylbenzene sulfonate, 4-vinylbenzoic acid; (meth)acrylonitriles; vinylesters of carboxylic acids comprising 1 to 20 carbon atoms, such as vinylacetate, vinyl propionate, vinyl butyrate, vinyl laurate, vinyl 2-ethylhexanoate, 1-methylvinyl acetate and vinyl pivalate; vinylesters of versatic acids; such as VeoVa-10 and VeoVa-9; all (meth)acrylamides; N-alkyl- and N,N-dialkyl-substituted (meth)acrylam ides comprising linear, branched or cycloaliphatic Ci-C22-alkyl groups, such as N,N-dimethylacrylamide or N-(tert-butyl)- acrylamide, functional acrylamide derivatives such as 2-Acrylamido-2-methyl-1-propanesulfonic acid; acrylic acid and linear, branched or cycloaliphatic alkylacrylic acids, especially acrylic acid, methacrylic acid, ethylacrylic acid, n-butylacrylic acid, iso- butylacrylic acid, 2-ethylhexylacrylic acid, laurylacrylic acid, stearylacrylic acid, tert-butylacrylic acid, cyclohexylacrylic acid, isobornylacrylic acid; ethylenically unsaturated sulfonic acids and sulfates and salts thereof, such as potassium[3-((meth)acryloyloxy)propyl]sulfonate; unsaturated polybasic acids, such as maleic acid, fumaric acid, maleic anhydride and itaconic acid; Aliphatic saturated polybasic acids, such as malonic acid, succinic acid, adipic acid, azelaic acid, and sebacic acid; aromatic saturated polybasic acids such as phthalic anhydride, isophthalic acid, terephthalic acid, trimellitic acid, 2,6-naphthalenedicarboxylic acid; Alicyclic polybasic acids, such as tetrahydrophthalic anhydride, hexahydro-4-methylphthalic anhydride (MHHPA), 1,2-hexahydrophthalic anhydride, 1,4-cyclohexanedicarboxylic acid, and nadic acid; aryl(meth)acrylates, such as benzyl(meth)acrylate and phenyl(meth)-acrylate; arylacrylic acids, such as phenylacrylic acid or benzylacrylic acid; mono(meth)acrylates of ethers, polyethyleneglycols, polypropyleneglycols; mixed polyethylene/propylene glycols each comprising 5 to 80 carbon atoms, such as methoxyethoxyethyl(meth)-acrylate,ethoxymethyl(meth)acrylate, tetrahydrofurfuryl(meth)acrylate, benzyloxymethyl(meth)acrylate, 1-butoxypropyl(m eth)acrylate, cyclohexyloxymethyl(meth)acrylate, furfuryl-(meth)acrylate, 2-butoxyethyl(meth)acrylate, 2-ethoxyethyl(meth)acrylate, methoxymethoxyethyl(meth)acrylate al lyloxym ethyl(m eth)acrylate, 1 ethoxybutyl(meth)acrylate, 1 -ethoxyethyl- (meth)acrylate, poly(ethyleneglycol)methylether(meth)acrylate and poly(propyleneglycol)methylether(meth)acrylate; am inoalkyl(meth)acrylates, such as 2-trimethylammoniumethyl(meth)acrylatchloride, N, N-dimethylam inoethyl(meth)acrylate or N, N-dimethylam ino- propyl(meth)acrylate; oxiranyl(meth)acrylates, such as glycidyl(meth)acrylat; 2,3-epoxybutyl(meth)acrylate, 3,4-epoxy- butyl(meth)acrylate; Heterocyclic (meth)acrylates, such as piperonyl(meth)acrylate; Saturated or unsaturated silanes with different functional groups such as aryl, aralkyl, mercapto, halo, amino, vinyl, carboxyl, (meth)acryl, ester, cyano, aldehyde, acids, epoxy, silyl esters and etc.

Bio-compostable pressure sensitive adhesives, bio-compostable textile and leather binders are destroyed by various microorganisms in nature and separated into their natural components, so that they can participate in the cycle of nature.

As mentioned herein before, the present invention is based on the specific combination of at least 2 populations formed by large and small polymer particles wherein both of these populations contain particles comprising hemalactide macromonomer. The average particle size is determined by using dynamic light scattering measurement
with the instrument Malvern Zetasizer Nano-S. The sample to be analysed is diluted in 10 mM NaCl aqueous (with demineralized water) solution. 1-2 drops of sample is added to 50 mL 10mM NaCl solution. This mixture is placed into measuring PS sample cell by opening the cell area lid. Cell is placed into cell holder and thermal cap is placed on the cell. Cell area lid is closed and measurement is started. For each sample 3 measurements are done and an average result is reported.

According to an embodiment of the present invention, the particle size of 60 to 90% by weight of polymer particles is between 250 to 1000 nm and 10 to 40% by weight is between 50 to 500nm.

According to a preferred embodiment of the present invention, the particle size of 75 to 90% by weight of the polymer particles is between 350 to 750 nm and 10 to 25% by weight are between 50 to 200 nm.

The term "seed polymer" as used herein and throughout the specification refers to an aqueous polymer dispersion having finely divided particles. It can be prepared by emulsion polymerization method. The average particle size of the seed polymer particles is between, 50 to 500nm, more preferably 10 nm to 100 nm, and most preferably 30 nm to 75 nm. The particle size of the seed is very important for controlling the particle size distribution of the resulting bimodal or in general polymodal polymer composition. The resulting seed polymer is firstly used in the initiation step of the polymerization and then for a second time after a pre-determined amount of monomer emulsion is added into the polymerization medium. The addition of seed polymer 1 at the start and the delayed addition of seed polymer 2 into the polymerization medium in particular steps of the process enable formation of particles having different particle sizes. According to an embodiment of the present invention seed polymers 1 and 2 may both be added at the start of the polymerization.

According to an embodiment of the present invention, a biodegradable polymer composition is produced which is formed by waterborne radical emulsion polymerization of monomers selected from the group comprising ethylenically unsaturated monomers and 0.5 to 50% by weight of oligomer lactide 2-hydroxyethyl, methacrylate terminated macromonomer, based on the total weight of the monomers, and is characterized in that,
the biodegradable polymer composition is composed of at least two different populations of particles dispersed in the water phase, said populations differing in average particle size value by at least a factor of 1.5 and said two different populations jointly constitute at least 70% by weight of the total polymeric content, wherein the average particle size is measured by dynamic light scattering measurement.

In a different embodiment the biodegradable polymer composition has a bimodal particle size distribution and wherein,
a) the average particle size of larger population of particles in the polymer composition is greater than 250 nanometers,
b) the average particle size of fine population of particles in the polymer composition is less than or equal to 250 nanometers. According to this embodiment it is preferred to have a bimodal particle size distribution wherein the 60 to 90% by weight of particles are formed by the large population of particles having an average particle size of between 250 nm to 500 nm and 10 to 40% by weight are formed by fine particles having an average particle size between 50 to 250 nm. According to a further embodiment, a fine population of particles comprise at least 5% by weight of particles
having an average particle size of less than or equal to 200 nm and a large population of particles comprise 5 to 95% by weight of particles having a particle size of greater than 200 nm.

In a further embodiment the biodegradable polymer composition has a polymodal particle size distribution wherein the 60 to 90% by weight of particles are formed by the large population of particles having an average particle size of between 250 nm to 1 micrometer and 10 to 40% by weight are formed by fine particles having an average particle size between 50 to 500 nm. Preferably the particle size of 75 to 90% by weight of the polymer particles are between 350 to 750 nm and 10 to 25% by weight are between 50-200 nm.

In a preferred embodiment the sum of the large and fine population of particles of the biodegradable polymer composition constitutes over 90% by weight of the polymer composition.

In another preferred embodiment the biodegradable polymer composition has a solid content more than 60%. The biodegradable polymer composition having a solid content in the range of %50 to %60 is also an embodiment of the present invention,

It is also a preferred embodiment to have a biodegradable polymer composition wherein its viscosity is lower than 1000 cps (Brookfield LVT 3/60, at 25 °C).

In an embodiment of the present invention the biodegradable polymer composition is a pressure sensitive adhesive composition.

In a further aspect the biodegradable polymer composition of the present invention is used as pressure sensitive adhesive particularly for tapes such as specialty tapes, masking tapes, packaging tapes, labels of paper or film and as flooring adhesive, lamination adhesive, flexible packaging adhesive, protective films adhesive, contact adhesive and paper coatings.

In a different embodiment the biodegradable polymer composition is used in textile and leather applications, as a textile binder or as a coating composition.

A process for producing the biodegradable polymer composition is a further aspect of the present invention and comprises the steps of;
separately providing at least one seed polymer having an average particle size of 10 nm to 500 nm and providing a monomer emulsion comprising the macromonomer oligomer lactide 2-hydroxyethyl, methacrylate terminated and comonomers selected from ethylenically unsaturated monomers suitable to copolymerize therewith,
starting to polymerize the monomer emulsion by radical emulsion polymerization in an aqueous polymerization medium containing a first seed polymer,
after 0 to 75% by weight of the addition of the monomer emulsion, adding a second seed polymer to the polymerization medium, and
polymerizing the rest of the monomer emulsion in the presence of the second seed polymer.

In different embodiments of the present invention the second seed polymer may be added either at the start or after 25 to 75% by weight of the addition of the monomer emulsion or more preferably after 30 to 70% by weight or most preferably after 40 to 60% by weight of the addition of the monomer emulsion.

In a preferred embodiment the first seed polymer and the second seed polymer are identical. In a different embodiment the first seed polymer and the second seed polymer are different with respect to particle size and/or monomer composition.

In another preferred embodiment one or both of the seed polymer(s) is biodegradable. According to this embodiment it is preferred to produce the one or both of the seed polymer(s) with hemalactide macromonomer in an amount from 0.5% to 50% by weight, based on the total weight of the monomers of the seed polymer(s).

In a different embodiment of the present disclosure the process for producing the biodegradable polymer composition comprises the steps of separately polymerizing a biodegradable polymer comprising the larger particles and a biodegradable polymer comprising the fine particles, and
blending in order to provide the resulting waterborne biodegradable polymer composition having a bimodal particle size distribution.

In a preferred embodiment the ratio of the biodegradable polymer having the larger particles to the biodegradable polymer having the fine particles, is 6:1 to 2:1.

### EXAMPLES

Inventive example is as explained in detail below followed by the comparative example;

### Chemicals used for HEMALACTIDE synthesis

(S,S)-3,6-dimethyl-1,4-dioxane-2,5-dione was used as received (L,L-lactide; purity ≥ 99.5%, free acid < 1 meq kg-1, water content < 0.02%).
2-ethylhexanoic acid tin(II) salt (Sn(Oct)2)
dichloromethane (DCM; purity ≥ 99.8%)
ethanol (EtOH; over molecular sieve, H2O < 0.01%, purity ≥ 99.8%)
2-hydroxyethyl methacrylate (HEMA; ABCR, 97% purity)
For size exclusion chromatography, polystyrene standards from 500Da to 2,000,000Da (Sigma Aldrich) were used for calibration and chloroform (purity ≥ 99%, J. T. Baker) as eluent.

### Example A (synthesis of hemalactide macromonomer)

L,L-Lactide (LA) was melted at 130 ± 1°C in a stirred flask in a glove box (water < 10 ppm) and then, Sn(Oct)2 and HEMA solution, prepared at fixed molar ratio equal to 1/400, were added at given molar ratio with respect to LA in order to control final molecular weight (MW) of the resulting macromonomer. In detail, for the synthesis of the macromonomer adopted for degradation studies, which is composed by four lactic acid, 41.5 g of lactide, 18.5 g of HEMA, and 150 mg of Sn(Oct)2 have been loaded into the reactor. The polymerization is quenched at the maximum conversion and the lowest dispersity values. Produced macromonomers (HEMA-LAn) with average LA chain length, n of 4, are all stored at 4 °C waiting for further polymerization.

Two other macromonomers with n equal to 3 and 8 (i.e. units of Lactic Acid) have been synthesized following the same procedure.

Details are given in the Table below:

**Table 1. Raw material amounts for different Lactic acid unit containing HEMALACTIDE macromonomers**

| n Macromonomer | HEMA (g) | Lactide (g) | Sn(Oct)2 (mg) |
|---|---|---|---|
| 3 | 13.9 | 31.1 | 113 |
| 4 | 18.5 | 41.5 | 150 |
| 8 | 37.0 | 83.0 | 300 |

### Characterization of Macromonomers

Molecular weight distribution of all samples are characterized by Size Exclusion Chromatrography SEC (Agilent, 1100 series) equipped with two detectors, Ultraviolet (UV) and Differential Refractive Index (RI). A pre-column with an oligopore column (Polymer Laboratories, length of 300 mm and diameter of 7.5 mm, measuring range 0 -4,500 Da) have been used. Chloroform is used as eluent at a flow rate of 1 mL min-1 and temperature of 30 °C. Universal calibration, based on polystyrene standards, is applied using the following equation:
where a and K are the Mark-Houwink constants for PLA (index 2) and the reference polymer (index 1). The Mark-Houwink constants for PLLA, K2 = 0.01709 mL g-1 and a2 = 0.806 are used in this work along with the following values for polystyrene: K1 = 0.0049 mL g-1 and al = 0.794.27

The structure and composition of macromonomer is determined by 1H-NMR and 13C-NMR in CDCl3 using 500 MHz Ultrashield NMR spectrometer (Bruker, Switzerland). Mn is determined by 1H-NMR as well, in order to validate the corresponding values estimated by SEC. Finally, infrared spectra is recorded using attenuated total reflection absorbance detection (TENSOR Series FT-IR spectrometer, Bruker). Scans are recorded between 4000 cm-1 and 500 cm-1 (resolution = 8 cm-1).

Finally, the livingness of the macromonomer synthesis is proven by plotting the conversion of the monomer as well as the modified conversion versus time. As reported in literature the linearity of the latter modified conversion is proving the livingness of the ROP adopted for the synthesis of the macromonomers.

### Inventive Example

118 parts of deionized water was added to a 3-necked flask equipped with stirrer, thermometer and a reflux condenser and the flask was heated to 90 °C. 1,8 parts of Ammonium persulfate dissolved in 9,8 parts of deionized water was added to the flask. 8,2 parts of seed polymer that has a particle size of 50 nm was added to the flask and the line was flushed with 4,3 parts of deionized water. The temperature decreased to 82,1 °C.

The flask was heated to 85 °C and feeding of the monomer emulsion starts, which contains 83 parts of deionized water, 2,8 parts of sodium dodecyl benzene sulphonate based on a branched chain alkylate,14,4 parts of alkyl ether sulfosuccinate sodium salt, 9,6 parts of Glycidyl methacrylate, 572,7 parts of Butyl acrylate, 25,4 parts of HEMALACTIDE macromonomer of Example A, 30,8 parts of Methyl Methacrylate and 7,8 parts of Acrylic acid. 0,8 parts of Ammonium Persulfate and 1,8 parts of tetra sodium pyrophosphate dissolved in 35,3 parts of deionized water was fed parallel to the monomer emulsion. After 50% of the flows were completed, 23,3 parts of a seed polymer that has a particle size of 50 nm was added to the flask and the line was purged with 4,3 parts of deionized water. The duration of monomer emulsion and initiator flows are 180 min. After the initiator and monomer emulsion flows were finished, the reaction temperature was kept at 85°C for 60 min. The reactor temperature was cooled down to 80 °C and 0,6 parts of 25% Ammonium Hydroxide solution was added to the flask. The reactor again cooled down to 65 °C and 0,8 parts of Tert-butylhydroperoxide dissolved in 8,9 parts of deionized water was added to the reactor in 15 minutes. After 5 minutes, 0,7 parts of Bruggolite FF6 M dissolved in 8,9 parts of deionized water was added to the flask in 15 minutes. The reactor temperature was cooled down to 45 °C and 5 parts of 25% Ammonium hydroxide solution was added to the reactor in order to adjust the reactor pH between 6,5-7,5. (Solid content: 67.4%, Viscosity (LVT 3/60): 330 cps, pH:7.1, Particle size: %74 440nm, %26 142nm).

### Comparative Example

118 parts of deionized water was added to a 3-necked flask equipped with stirrer, thermometer and a reflux condenser and the flask was heated to 90 °C. 1,8 parts of Ammonium persulfate dissolved in 9,8 parts of deionized water was added to the flask. 8,2 parts of a seed polymer that has a particle size of 50 nm was added to the flask and the line was flushed with 4,3 parts of deionized water. The temperature decreased to 82,1 °C. The flask was heated to 85 °C and feeding of the monomer emulsion starts,
which contains 83 parts of deionized water, 2.8 parts of sodium dodecyl benzene sulphonate based on a branched chain alkylate,14.4 parts of alkyl ether sulfosuccinate sodium salt, 9.6 parts of Glycidyl methacrylate, 572.7 parts of Butyl acrylate, 30.8 parts of Methyl Methacrylate and 7.8 parts of Acrylic acid. 0,8 parts of Ammonium Persulfate and 1,8 parts of tetra sodium pyrophosphate dissolved in 35.3 parts of deionized water was fed parallel to the monomer emulsion. After 50% of the flows were completed, 23.3 parts of same seed polymer that has a particle size of 50 nm was added to the flask and the line was purged with 4.3 parts of deionized water. The duration of monomer emulsion and initiator flows are 180 min. After the initiator and monomer emulsion flows were finished, the reaction temperature was kept at 85°C for 60 min. The reactor temperature was cooled down to 80 °C and 0.6 parts of 25% Ammonium Hydroxide solution was added to the flask. The reactor again cooled down to 65 °C and 0, 8 parts of Tert-butylhydroperoxide dissolved in 8.9 parts of deionized water was added to the reactor in 15 minutes.

After 5 minutes, 0.7 parts of Bruggolite FF6 M dissolved in 8.9 parts of deionized water was added to the flask in 15 minutes. The reactor temperature was cooled down to 45 °C and 5 parts of 25% Ammonium hydroxide solution was added to the reactor in order to adjust the reactor pH between 6.5-7.5.
(Solid content:66%, Viscosity (Brookfield LVT 3/60, at 25 °C): 326 cps, pH:7.0, Particle size: 23%- 119 nm, 77% - 552 nm).

The solid content of the seed polymer and the resulting polymer composition are determined according to the method in which small aluminium trays (or bigger if necessary) are weighed and recorded as T1. The amount of the substance to be analyzed is weighed into already weighted tray and registered as T2. Same repeated for 3 times. Left the trays in oven at a specified time and temperature which is 20 min. and 150 °C. Trays are removed and cooled at room temperature and weighed, registered as T3. Solid content is calculated with the formula below and average of 3 trays is taken: $Solid content % = \left(T3-T1\right) / \left(T2-T1\right) * 100$

### Application Test Results of bio-modal polymers of the present invention

The adhesive polymer was coated on BOPP film as 50 µ with applicator and was dried at 70 °C for 10 min. The adhesive-coated samples were left for 24 h in a controlled environment (23±2 °C, 50± 5 relative humidity) chamber prior to testing the adhesive properties. A specimen of 25x400 mm was cut in the machine direction and laminated onto the clean stainless steel test plate using finger pressure. The average force to peel the specimen from test plate was recorded. In this study, peel adhesions were tested according to FTM1 on several substrates as 180° at 300 mm/min. Shear strength is the internal cohesion and the resistance to shear from a standard surface and gives an indication of the mode of adhesive or cohesive failure. Static shear test was applied according to FTM 8 for resistance to shear from a standard surface. Loop tack value of PSAs is expressed as the force required separating, at a specified speed, a loop of material which has been brought into contact with a specified area of a standard surface (FTM 9).

**Table 2. Application Test Results for Paper Label Adhesives**

| **Performance Tests** | **Inventive Example** | **Comparative Example** |
|---|---|---|
| Peel strength on LDPE (N/25mm) | 12.1 | 3.0 |
| Peel strength on Cardboard (N/25mm) | 9.6 | 8.6 |
| | | |
| Initial Tack on LDPE (N/25 mm) | 7.5 | 6.3 |
| Initial Tack on SS (N/25 mm) | 12.3 | 11.1 |
| Initial Tack on Glass (N/25 mm) | 13.6 | 12.1 |
| | | |
| Shear strength on glass( hrs) | 8.5 | 7.5 |
| Shear strength on SS (hrs) | 6.5 | 6.1 |
| | | |
| After aging Peel strength on Cardboard (N/25mm) | 3.5 | 3.6 |
| After aging initialTack on LDPE( N/25mm) | 2.8 | 2.4 |
| Mandrel Hold on LDPE (cm (MD-CD)) | 0-0 | 0-0 |

Comparative and inventive polymers are mixed with tackifier dispersions before coating onto siliconised liner and applied as 20 gsm dry.

Aging test performed after conditioning the films at 50 °C and 95% humidity for 2 days and then at 23 °C and %50 humidity for 1 day. Mandrel Hold test run according to FTM24.

According to the results, bio-degradable inventive example has advantage on cohesion strength while it has acceptable adhesion and after aging performance stability.

## Claims

1. *A biodegradable polymer composition formed by waterborne radical emulsion polymerization of monomers selected from the group comprising ethylenically unsaturated monomers, and 0.5 to 50% by weight of oligomer lactide 2-hydroxyethyl, methacrylate terminated macromonomer, based on the total weight of the monomers, **characterized in that**,*
*the biodegradable polymer composition is composed of at least two different populations of particles dispersed in the water phase, said populations differing in average particle size value by at least a factor of 1.5 and said two different populations jointly constitute at least 70% by weight of the total polymeric content, wherein the average particle size is measured by dynamic light scattering measurement.*

2. *The biodegradable polymer composition according to claim 1 wherein it has a bimodal particle size distribution and wherein,*
*a) the average particle size of large population of particles in the polymer composition is greater than 250 nanometers,*
*b) the average particle size of fine population of particles in the polymer composition is less than or equal to 250 nanometers.*

3. *The biodegradable polymer composition according to claim 1 wherein the 60 to 90% by weight of particles are formed by the large population of particles having an average particle size of between 250 nm to 1 micrometer and 10 to 40% by weight are formed by fine particles having an average particle size between 50 to 500 nm.*

4. *The biodegradable polymer composition according to claims 1 to 3 wherein the sum of the large and fine population of particles constitutes over 90% by weight of the polymer composition.*

5. *The biodegradable polymer composition according to claims 1 to 4 having a solid content more than 60%.*

6. *The biodegradable polymer composition according to claims 1 to 4 having a solid content in the range* of 50 wt % to 60 wt % as measured in the description.

7. *The biodegradable polymer composition according to claims 5 or 6 wherein its viscosity is lower than 1000 cps (Brookfield LVT 3*/*60, at 25 °C).*

8. *The biodegradable polymer composition according to anyone of claims 1 to 7, wherein it is a pressure sensitive adhesive composition.*

9. *Use of the biodegradable polymer composition according to claim 8 as pressure sensitive adhesive particularly for tapes such as specialty tapes, masking tapes, packaging tapes, labels of paper or film and as flooring adhesive, lamination adhesive, flexible packaging adhesive, protective films adhesive, contact adhesive and paper coatings.*

10. *Use of the biodegradable polymer composition according to anyone of claims 1 to 7 in textile and leather applications, as a textile binder or as a coating composition.*

11. *A process for producing the biodegradable polymer composition of anyone of claims 1 to 8, comprising the steps* of:
*separately providing at least one seed polymer having an average particle size of 10 nm to 500 nm and providing a monomer emulsion comprising the macromonomer oligomer lactide 2-hydroxyethyl, methacrylate terminated and comonomers selected from ethylenically unsaturated monomers suitable to copolymerize therewith,*
*starting to polymerize the monomer emulsion by radical emulsion polymerization in an aqueous polymerization medium containing a first seed polymer,*
*after 0 to 75% by weight of the addition of the monomer emulsion adding a second seed polymer to the polymerization medium, and*
*polymerizing the rest of the monomer emulsion in the presence of the second seed polymer.*

12. *The process according to claim 11 wherein the first seed polymer and the second seed polymer are identical or different with respect to particle size and*/*or monomer composition.*

13. *The process according to claim 12 wherein one or both of the seed polymer(s) is biodegradable.*

## Patentansprüche

1. Eine biologisch abbaubare Polymerzusammensetzung, gebildet durch wässrige radikalische Emulsionspolymerisation von Monomeren, ausgewählt aus der Gruppe umfassend ethylenisch ungesättigte Monomere und 0,5 bis 50 Gew.-% Oligomerlactid-2-Hydroxyethylmethacrylat-terminiertes Makromonomer, bezogen auf das Gesamtgewicht der Monomere, **dadurch gekennzeichnet, dass**
die biologisch abbaubare Polymerzusammensetzung aus mindestens zwei unterschiedlichen Populationen von in der Wasserphase dispergierten Partikeln zusammengesetzt ist und sich diese Populationen im Wert der durchschnittlichen Partikelgröße um mindestens einen Faktor von 1,5 unterscheiden und diese zwei unterschiedlichen Populationen zusammen mindestens 70 Gew.-% des gesamten Polymergehalts ausmachen, wobei die durchschnittliche Partikelgröße mittels dynamischer Lichtstreuung gemessen wird.

2. Die biologisch abbaubare Polymerzusammensetzung gemäß Anspruch 1, **dadurch gekennzeichnet, dass** sie eine bimodale Partikelgrößenverteilung aufweist und dass
a) die durchschnittliche Partikelgröße der großen Partikelpopulation in der Polymerzusammensetzung größer als 250 Nanometer ist,
b) die durchschnittliche Partikelgröße der feinen Partikelpopulation in der Polymerzusammensetzung kleiner als oder gleich 250 Nanometer ist.

3. Die biologisch abbaubare Polymerzusammensetzung gemäß Anspruch 1, **dadurch gekennzeichnet, dass** 60 bis 90 Gew.-% der Partikel durch die große Partikelpopulation mit einer durchschnittlichen Partikelgröße zwischen 250 nm und 1 Mikrometer gebildet werden und 10 bis 40 Gew.-% durch die feine Partikelpopulation mit einer durchschnittlichen Partikelgröße zwischen 50 und 500 nm gebildet werden.

4. Die biologisch abbaubare Polymerzusammensetzung gemäß einem der Ansprüche 1 bis 3, **dadurch gekennzeichnet, dass** die Summe der großen und feinen Partikelpopulation mehr als 90 Gew.-% der Polymerzusammensetzung ausmacht.

5. Die biologisch abbaubare Polymerzusammensetzung gemäß einem der Ansprüche 1 bis 4 mit einem Feststoffgehalt von mehr als 60 %.

6. Die biologisch abbaubare Polymerzusammensetzung gemäß einem der Ansprüche 1 bis 4 mit einem Feststoffgehalt im Bereich von 50 Gew.-% bis 60 Gew.-%, wie in der Beschreibung gemessen.

7. Die biologisch abbaubare Polymerzusammensetzung gemäß Anspruch 5 oder 6, **dadurch gekennzeichnet, dass** ihre Viskosität niedriger als 1000 cps ist (Brookfield LVT 3/60, bei 25 °C).

8. Die biologisch abbaubare Polymerzusammensetzung gemäß einem der Ansprüche 1 bis 7, **dadurch gekennzeichnet, dass** sie eine druckempfindliche Klebstoffzusammensetzung ist.

9. Verwendung der biologisch abbaubaren Polymerzusammensetzung gemäß Anspruch 8 als druckempfindlicher Klebstoff, insbesondere für Klebebänder, wie Spezialklebebänder, Abdeckklebebänder, Verpackungsklebebänder, Etiketten aus Papier oder Folie, sowie als Bodenbelagsklebstoff, Laminierklebstoff, Klebstoff für flexible Verpackungen, Klebstoff für Schutzfolien, Kontaktklebstoff und als Papierbeschichtung.

10. Verwendung der biologisch abbaubaren Polymerzusammensetzung gemäß einem der Ansprüche 1 bis 7 in Textil- und Lederanwendungen, als Textilbindemittel oder als Beschichtungszusammensetzung.

11. Verfahren zur Herstellung der biologisch abbaubaren Polymerzusammensetzung gemäß einem der Ansprüche 1 bis 8, umfassend die Schritte:
Separates Bereitstellen mindestens eines Saatpolymers mit einer durchschnittlichen Partikelgröße von 10 nm bis 500 nm
und Bereitstellen einer Monomeremulsion, umfassend das Oligomerlactid-2-Hydroxyethylmethacrylat-terminierte Makromonomer und Comonomere, ausgewählt aus ethylenisch ungesättigten Monomeren, die geeignet sind, damit zu copolymerisieren,
Beginnen der Polymerisation der Monomeremulsion durch radikalische Emulsionspolymerisation in einem wässrigen Polymerisationsmedium, das ein erstes Saatpolymer enthält,
nach Zugabe von 0 bis 75 Gew.-% der Monomeremulsion Zugeben eines zweiten Saatpolymers zu dem Polymerisationsmedium, und
Polymerisieren des Rests der Monomeremulsion in Gegenwart des zweiten Saatpolymers.

12. Das Verfahren gemäß Anspruch 11, wobei das erste Saatpolymer und das zweite Saatpolymer hinsichtlich Partikelgröße und/oder Monomerzusammensetzung identisch oder unterschiedlich sind.

13. Das Verfahren gemäß Anspruch 12, wobei eines oder beide der Saatpolymere biologisch abbaubar sind.

## Revendications

1. Composition polymère biodégradable formée par polymérisation radicalaire en émulsion aqueuse de monomères choisis dans le groupe comprenant des monomères éthyléniques insaturés, et de 0,5 à 50 % en poids d'oligomère lactide à terminaison 2-hydroxyéthylméthacrylate, sur la base du poids total des monomères, **caractérisée en ce que**,
la composition polymère biodégradable est composée d'au moins deux populations différentes de particules dispersées dans la phase aqueuse, lesdites populations ayant une valeur de dimension moyenne des particules qui diffère selon au moins un facteur 1,5 et lesdites deux populations différentes constituant conjointement au moins 70 % en poids de la teneur en polymère totale, dans laquelle la dimension moyenne des particules est mesurée par diffusion dynamique de la lumière.

2. Composition polymère biodégradable selon la revendication 1 dans laquelle elle présente une distribution granulométrique bimodale et dans laquelle,
a) la dimension moyenne des particules d'une population de particules grosses dans la composition polymère est supérieure à 250 nanomètres,
b) la dimension moyenne des particules d'une population de particules fines dans la composition polymère est inférieure ou égale à 250 nanomètres.

3. Composition polymère biodégradable selon la revendication 1 dans laquelle 60 à 90 % en poids des particules sont formées par la population de particules grosses ayant une dimension moyenne des particules comprise entre 250 nm et 1 micromètre et 10 à 40 % en poids sont formées par des particules fines ayant une dimension moyenne des particules comprise entre 50 et 500 nm.

4. Composition polymère biodégradable selon les revendications 1 à 3 dans laquelle la somme des populations de particules grosses et fines constitue plus de 90 % en poids de la composition polymère.

5. Composition polymère biodégradable selon les revendications 1 à 4 ayant une teneur en solide supérieure à 60 %.

6. Composition polymère biodégradable selon les revendications 1 à 4 ayant une teneur en solide dans la plage de 50 % en poids à 60 % en poids telle que mesurée dans la description.

7. Composition polymère biodégradable selon les revendications 5 ou 6 dans laquelle sa viscosité est inférieure à 1 000 cP (viscosimètre LVT Brookfield 3/60, à 25 °C).

8. Composition polymère biodégradable selon l'une quelconque des revendications 1 à 7 dans laquelle il s'agit d'une composition adhésive sensible à la pression.

9. Utilisation de la composition polymère biodégradable selon la revendication 8 en tant qu'adhésif sensible à la pression, en particulier pour des rubans tels que les rubans spécialisés, les rubans de masquage, les rubans d'emballage, les étiquettes en papier ou en film, ainsi qu'en tant qu'adhésif pour revêtements de sol, adhésif de laminage, adhésif d'emballage souple, adhésif pour films de protection, adhésif de contact et revêtements pour papier.

10. Utilisation de la composition polymère biodégradable selon l'une quelconque des revendications 1 à 7 dans les applications textiles et de cuir, en tant que liant textile ou en tant que composition de revêtement.

11. Procédé de production de la composition polymère biodégradable selon l'une quelconque des revendications 1 à 8, comprenant les étapes consistant à :
fournir séparément au moins un polymère semence ayant une dimension moyenne des particules comprise entre 10 nm et 500 nm et fournir une émulsion de monomères comprenant l'oligomère lactide 2-hydroxyéthyle, un macromonomère à terminaison méthacrylate et des comonomères choisis parmi des monomères éthyléniques insaturés adaptés à la copolymérisation avec celui-ci,
démarrer la polymérisation de l'émulsion de monomères par polymérisation radicalaire en émulsion dans un milieu de polymérisation aqueux contenant un premier polymère semence,
après l'ajout de 0 à 75 % en poids de l'émulsion de monomères, ajouter un second polymère semence au milieu de polymérisation, et
polymériser le reste de l'émulsion de monomères en présence du second polymère semence.

12. Procédé selon la revendication 11 dans lequel le premier polymère semence et le second polymère semence sont identiques ou différents en ce qui concerne la taille de particule et/ou la composition en monomères.

13. Procédé selon la revendication 12 dans lequel un ou les deux polymères semences sont biodégradables.
